# EUROPEAN PATENT SPECIFICATION

(11) **EP 1 563 906 B1**
(45) Date of publication and mention of the grant of the patent: **21.06.2006**
(21) Application number: 04250631.1
(22) Date of filing: 05.02.2004
(51) Int. Cl.: B01L 3/00

(54) **Method of forming a fluid-channel device with covalently bound hard and soft structural components**
Herstellungsverfahren für eine Vorrichtung mit Flüssigkeitskanälen und kovalent gebundenen Hart- und Weich- Komponenten
Méthode de fabrication pour un appareil avec canaux pour fluide avec composants durs et doux structuraux liés par covalence

(43) Date of publication of application: 17.08.2005
(73) Proprietor: Agilent Technologies, Inc., Palo Alto, CA 94306 (US)
(72) Inventor: Roitman, Daniel B., Menlo Park, CA 94025 (US); Robotti, Karla M., Mountain View, CA 94043 (US); Killeen, Kevin P., Palo Alto, CA 94303 (US)
(74) Representative: Jehan, Robert

(56) References cited:
- WO-A-00/43748
- US-A1- 2002 025 529
- US-A1- 2002 144 738
- REYES, IOSSIFIDIS, AUROUX, MANZ: "Micro Total Analysis Systems. 1. Introduction, Theory and Technology" ANALYTICAL CHEMISTRY, vol. 74, 2002, pages 2623-2636, XP002311567

## Description

The present invention relates to analytical chemistry and, more particularly, to the manufacture of fluid-channel devices such as microfluidic devices used in analytical chemistry. A major objective of the present invention is to provide for securely bonded hybrid hard/soft microfluidic devices.

Advances in the medical, chemical, environmental, and forensic sciences have been made possible by advances in the equipment used for analyzing chemical samples. Among the most important types of analytical equipment are devices that separate chemical components according to their migration rates along a channel. Such separation technologies including chromatography, in which the rate of motion of a chemical component through a channel is determined by its partitioning between mobile and stationary phases. In general, narrow bore devices provide higher separation resolution by minimizing non-longitudinal motion through the channel. While large-bore channels tend to be tubular, the trend toward narrow-bore channels has led to "microfluidic" separation channels that are formed as small-cross-section trenches in planar substrates.

Microfluidic planar devices can be broadly classified into "hard" and "soft" devices, depending on the type of material used for the substrates. Hard devices are typically made from silicon, silica, or other inorganic oxides. Soft devices are typically polymers. The soft devices can be preferred where flexibility, simplicity and low-cost of manufacture are important. The hard devices can be preferred where rigidity, optical transparency, chemical inertness, and compatibility with electronic devices and their manufacturing techniques are paramount.

In many applications, advantages of both hard and soft devices are desired. For example, it is often desirable to combine the transparency (e.g., for detection purposes) associated with hard devices with the low cost of manufacture associated with soft devices. For these applications, hybrid hard/soft devices are of interest. For example, fluid channels can be formed in a slab of PDMS, which is then sandwiched between glass slides ("Monolithic Microfabricated Valves and Pumps by Multilayer Soft Lithography", Mark A. Unger et al., *Science*, *Vol. 288*, April 7, 2000).

Hybrid hard/soft devices must address the challenge of attaching the hard and soft devices. An external clamp can be used to hold a "sandwich" together, but the clamp then represents an additional component that must be adjusted and is subject to failure. An adhesive can be used to "glue" the hard and soft devices together, but like an external clamp, the glue is another component subject to failure. In addition, the glue is a potential source of chemical contamination. Also, the glue can impair transparency where optical access is required.

Hard and soft devices can also be attached by fusing one to the other. For example, some soft devices are based on thermoplastics or at least have a thermoplastic layer. Such devices can be heated and pressed against a hard device so that the hard and soft devices adhere. However, the temperatures involved in fusing can degrade preformed microchannels or associated heat-sensitive components. Also, if the components have different thermal coefficients of expansion, differential contraction after fusing can cause a component to break or leave undesirable stresses in the completed structure. Also, many soft materials of interest, e.g., many polyimides, are not thermoplastics-so this approach to attachment is not applicable.

It is also possible to make hybrid devices by spin casting soft material onto hard materials, or by growing films by vapor-phase techniques. In the latter case, the soft material is either in liquid form or in gas form at the time of fabricating the composite structure, thus pre-structuring or pre-patterning the soft layer. These techniques also make it hard to fabricate devices where the hard layer is patterned beforehand. Accordingly, there remains a need for an improved hybrid hard/soft microfludic devices and a method of making the same.

According to an aspect of the present invention there is provided a method of forming a microfluidic device as specified in claim 1.

The present invention provides for covalently bonding a polymer fluid-channel substrate with a second structural component to form a fluid-channel device. In preparation for the covalent bonding, a surface of the polymer fluid-channel substrate and a polymer or oxide surface of the second structural component are pretreated to render them complementary. Preferably, the treatments result in one of the surfaces having free amino groups and the other surface having free amino-complement (e.g., hydroxyl, carbonyl, peroxyl, carboxyl, anhydride, ester, epoxide, or isocyanate) groups. The covalent bonding can be an amidation between the amino groups and the amino-complement groups. The invention provides for forming fluid channels before, during, or after the covalent bonding.

The second structural component can have an oxide surface. For example, the second structural component can be a silica glass, silica crystal, alumina or sapphire. Alternatively, the second structural component can be a non-oxide, e.g., silicon, but with an oxide coating, e.g., of silicon dioxide. Also, the second structural component can have a polymer bonding surface.

One or both bonding surfaces can be thermoplastic: either an entire structural component can be thermoplastic or a structural component can have a thermoplastic layer at the bonding surface. For example, a non-thermoplastic polyimide structure can have a thin layer of thermoplastic polyimide at the bonding surface. The invention provides for heating a thermoplastic surface to render it compliant but not tacky to promote intimate contact when the structural components are pressed together. The intimate contact can then promote more thorough covalent bonding between the respective surfaces.

The invention provides for devices that permit analyses of fluids as well as devices that use fluids for some purpose. An example of the former is the use of a fluid channel as a sample-component separation path. An example of the latter is the movement of indexing-matching fluid in optical switches.

The invention provides for fluid-channel devices with built in electronic circuitry. For example, one face of a polymer structure with predefined fluid channels can be covalently bonded to an integrated circuit having a silicon dioxide bonding surface. The integrated circuit can include sensors and actuators (that affect fluid in the channels), as well as signal processing circuitry. The opposing face of the polymer structure can be bonded to a glass cover to provide optical access to the fluid channels. Thus, the invention provides for a fluid-channel device with on-board intelligence. Note that the invention provides for treating the integrated-circuit surface during or after its manufacture.

More generally, the invention provides for fluid-channel devices characterized by the advantages of diverse materials. The covalent bonds can, in some cases, exceed the strength of at least one of the components, so that the bond is not a limiting factor in the strength of the assembly. Since the bonding is covalent, the risk of contamination from free-moving adhesive components is reduced. Also, the molecular segments between the surfaces can provide some degree of elasticity to accommodate differential thermal expansion without slippage. These and other features and advantages are apparent from the description below with reference to the following drawings.

Embodiments of the present invention are described below, by way of example only, with reference to the accompanying drawings, in which:
FIGURE 1 is a schematic illustration of a preferred micro-fluidic manufacture method in accordance with the present invention.
FIGURE 2 is a schematic illustration of the microfludic device manufactured in accordance with the method of FIG. 1.
FIGURE 3 is a flow chart of the method of FIG. 1.

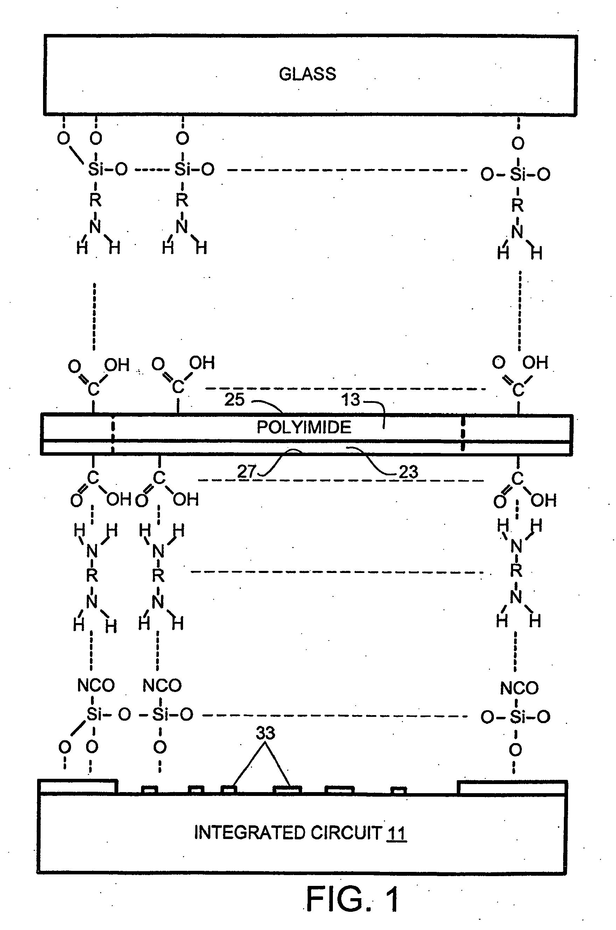

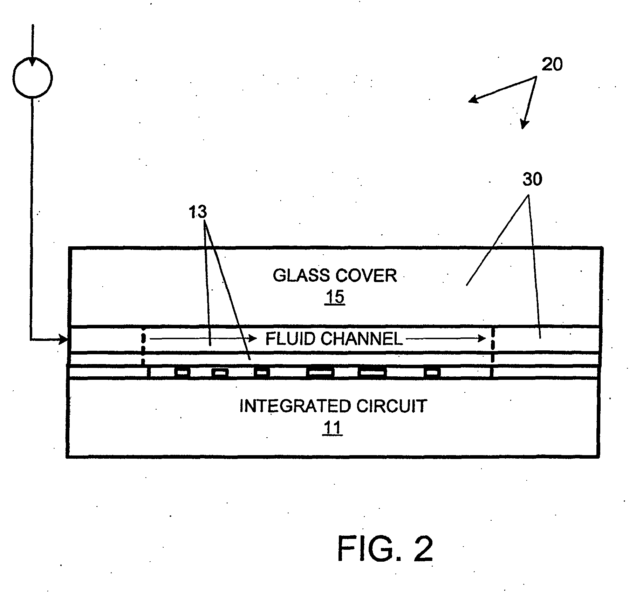

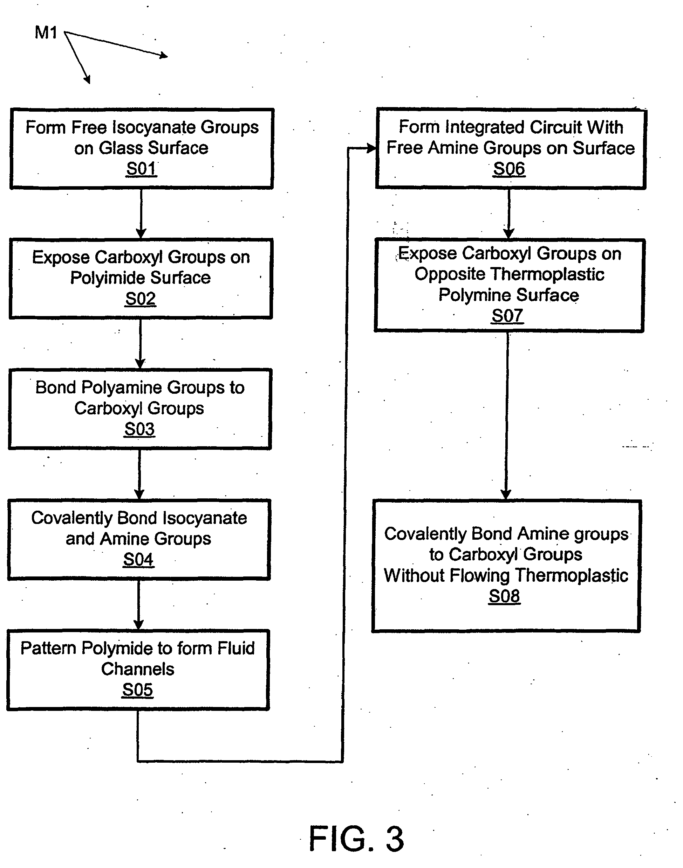

The preferred embodiment provides for covalently bonding an integrated circuit 11 and a glass cover 13 to a polyimide intermediate structure 15 as shown in FIG. 1. This process occurs in the context of the manufacture of a microfluidic device 20, shown in FIG. 2 in accordance with a method M1 flow charted in FIG. 3. The polyimide structure 15 has a relatively thick, 5 mil, non-thermoplastic (Kapton H) layer 21 and a relatively thin, 1-micron, thermoplastic coating 23 on one side.

At step S1, glass cover 13, precleaned using standard (e.g., RCA) procedures, is chemically modified with aminopropyl trimethoxysilane to render an amine-rich surface (FIG. 1). At step S2, polyimide structure 15 is activated by dipping in potassium hydroxide solution (1M, room temp, 1h); this is followed by HCl solution (ca 0.2M) to displace the salt ions, exposing carboxyl groups at the uncoated polyimide surface 25. Note that steps S1 and S2 can be performed concurrently or in any order.

At step S3, glass cover 13 and the uncoated surface 25 of polyimide structure 15 are bonded together by applying pressure (ca 230 psi) and elevated temperature (325C) in vacuum (ca 10 mtorr, 2 hours). As a result glass cover 13 is bonded to polyimide structure 15 with excellent adhesion, exceeding the internal cohesive strength of the polyimide.

At step S4, polyimide structure 15 is patterned using a low-power plasma process and laser ablation to define fluid channels 31. Channels 31, 150 microns wide channels and 0.5 cm long, are laser-ablated on the non-thermoplastic side, exposing underlying glass. Alternatively, (or in addition), polyimide structure 15 can be laser-ablated from the glass side, since glass cover 13 absorbs little energy from the laser relative to polyimide structure 15. This allows formation of shallow channels with windows.

The bonded glass helps maintain the polyimide position during the patterning. The glass can also be patterned (e.g., using a wet etch such as HF) at this point to obtain multi-level channels. The process cuts through both the thermoplastic and the underlying non-thermoplastic polyimide, exposing underlying glass. The glass cover plate thus provides a transparent window into the fluid channels.

At step S5, surface 27 of thermoplastic layer 23 is treated with potassium hydroxide solution and then HCL, as above, to expose carboxyl groups. At step S6, the activated thermoplastic is dipped in a polyamine solution. The polyamine ions bond to the exposed carboxyl groups, leaving excess free amino groups. At step S7, integrated circuit 11 is treated with an isocyanate-siloxane, yielding free isocyanate groups at the silicon-dioxide surface. Surface activation can be effected during or after manufacture of integrated circuit is complete.

At step S8, the glass-polyimide assembly 30 is bonded with integrated circuit 11. First, assembly 30 is aligned with integrated circuit 11 so that the channels align properly with the sensors and actuators 33 formed on integrated circuit 11. Then the assembly and the integrated circuit are bonded by applying pressure (ca 230 psi) and elevated temperature (180C) in vacuum (ca 10mtorr, 2 hours). In this case, the elevated temperature is selected to render thermoplastic layer 23 compliant without rendering it tacky. The compliant nature of the thermoplastic film allows it to conform to surface irregularities of the integrated circuit so that intimate contact and thus more thorough covalent bonding are achieved. Note the relatively low temperature processing is benign to sensors and actuators 33, which are polymeric.

Composite polyimide structure 15 can be formed by covalently bonding the layers as taught herein.
However, since the two layers have similar chemical characteristics, one of them can be chemically modified to render it complementary to the other. For instance, electrostatic self-assembly is one way to introduce in a controller manner a very thin layer of a polyelectrolyte of opposite charge to one of the surfaces.

Non-thermoplastic polyimide (Kapton H) surface can be activated using KOH, then dipped in a 0.12 M solution of a polyamine at pH 4. The surface is then rinsed with water and allowed to dry. Then a second activated polyimide layer is brought into contact to the first and pressure is applied in a vacuum. The temperature can be raised to 325 C to bond the layers. This approach can be used to bond any two materials with carboxylated surfaces. Alternatively, a cross linker can be introduced to covalently bond the two activated surfaces.

Once the bonding has completed, the resulting microfludic device 20 can be attached to a pump so that packing material and then samples can be forced into and through fluid channel 31. Due to the strength of the covalent bonds, device 20 can withstand the relatively high pressure required for packing and for high-pressure liquid chromatography.

While amidation can apply to carboxyl groups and its activated forms, the invention also applies to esters and epoxides. In the latter case, the amidation reaction does not generate water, which can be an advantage. As indicated above, the polyimide surface can be treated so that it is amine rich, instead of electrophilic. Instead of a polyimide, other polymer materials can be used including PEEK (polyetheretherketone), PDMS (polydimethylsiloxane), polypropylene, polyethylene, and polyurethane. In the latter case, the surface can be activated to yield free isocyanate or isothiocyanate groups, which bond at relatively low temperatures with amine groups.

In the illustrated embodiment, intimate contact between surfaces to be bonded is achieved by using a compliant thermoplastic layer. Alternatively, or in addition, extended polymers, e.g., polysilanes, can be used so that bonding can take place over a longer distance; in this case, less perfect contact is required between surfaces to be bonded. For example, bonding can take place over 100 A instead of 5-10 A.

The invention can also provide for bonding of surfaces that are initially neither an oxide nor a polymer. In these cases, a surface can be converted to one of the types to be bonded. For example, a silicon nitride layer can be treated using oxygen plasma to create oxide sites, which can be bonded to a polymer surfacew using the method of the invention. Also polymer surfaces can be modified and functionalized using plasma and pulsed plasma CVD to bond to aminated surfaces, as described by Stephen Kaplan et al. in "Applications for Plasma Surface Treatment in the Medical Industry", http://www.adhesivesmag.com/CDA/ArticleInformation/features/BNP_Features_Item/0,2101,1241,00.html. A combination of plasma CVD and wet or vapor-phase chemistry activation also can be used. For example, 02 plasma alone or followed by dipping in basic solution (KOH in water) can be used to generate surface hydroxyls, which in turn can be reacted with epichlorohydrin to generate epoxide groups on the polymeric surface, and capable of reacting with amines.

A different approach consists of modifying the hard oxide surface with a silane containing aldheydic functionality, such as 4-trimethoxybutanal (United Chemical Technologies product PSX1050). This surface will then react covalently and bond to an amine-modified surface of the polymeric ("soft") material. To provide an amine-terminated surface to the polymer, a plasma CVD technique may be used as described by Stehphen Kaplan et al. (Ibid).

The invention can provide for a variety of hard materials to which the polymer structure can be bonded. In the foregoing, the materials are glass and silicon dioxide areas of an integrated circuit. In addition, quartz, sapphire (AlO₃) and other oxides can be used. These and other variations upon and modifications to described embodiments are provided for by the present invention, the scope of which is defined by the following claims.

## Claims

1. A method of forming a microfluidic device, said method comprising:
*a)* obtaining a first structure with an oxide surface and a second structure with a polymer surface;
*b)* after step *a*, forming (S05) fluid channels in said second structure;
c) after step *a,* covalently bonding (S03) or exposing by chemical treatment molecules having amine groups to one of said oxide surface and said polymer surface so as to form free amine sites;
*d)* after step *a,* treating (S01) the other of said surfaces so as to form free amine-complement sites; and
e) after steps *c* and *d*, covalently bonding (S08) said amine sites with said amine-complement sites.

2. A method as recited in Claim 1 wherein said polymer is selected from a group consisting of polyimide, polyurethane, polypropylene, polyethylene, polydimethylsiloxane, polymethylmethacrylate., polyacrylates, polyetheretherketone, polycarbonate, and polystyrene.

3. A method as recited in Claim 2 wherein said polymer is a polyimide.

4. A method as recited in Claim 1 wherein said oxide surface is selected from a group consisting of oxides of silicon, aluminum, titanium.

5. A method as recited in Claim 1 wherein said first structure is an integrated circuit and said oxide surface is silicon dioxide formed on said integrated circuit.

6. A method as recited in Claim 1 wherein said amine-complement has free bonding sites selected from a group consisting of hydroxyl, carbonyl, peroxyl, carboxyl, anhydride, ester, epoxide; and isocyanate groups.

7. A method as recited is Claim 6 wherein said second structure is a composite of non-thermoplastic polyimide and thermoplastic polyimide, said polymer surface including at least some of said thermoplastic polyimide, step d being conducted under conditions such that said thermoplastic is compliant but remains in a non-tacky state.

8. A method as recited in Claim 1 wherein step b is performed after step e.

9. A method as recited in Claim 1 wherein step b is performed before step c.

10. A method as recited in Claim 1 wherein, in step c, said molecules are bound to said oxide surface.

## Patentansprüche

1. Ein Verfahren zum Bilden einer mikrofluidischen Vorrichtung, wobei das Verfahren folgende Schritte umfasst:
*a)* Erhalten einer ersten Struktur mit einer Oxidoberfläche und einer zweiten Struktur mit einer Polymeroberfläche;
*b)* nach Schritt *a*, Bilden (S05) von Fluidkanälen in der zweiten Struktur;
*c)* nach Schritt *a*, kovalentes Binden (S03) oder Exponieren, durch eine chemische Behandlung, von Molekülen, die Amingruppen aufweisen, an beziehungsweise gegenüber entweder der Oxidoberfläche oder der Polymeroberfläche, um freie Aminstellen zu bilden;
*d)* nach Schritt *a*, Behandeln (S01) der anderen der Oberflächen, um freie Amin-komplementäre Stellen zu bilden; und
*e)* nach den Schritten *c* und *d*, kovalentes Binden (S08) der Aminstellen mit den Amin-komplementären Stellen.

2. Ein Verfahren gemäß Anspruch 1, bei dem das Polymer aus einer Gruppe ausgewählt ist, die aus Polyimid, Polyurethan, Polypropylen, Polyethylen, Polydimethylsiloxan, Polymethylmethacrylat, Polyacrylaten, Polyetheretherketon, Polycarbonat und Polystyren besteht.

3. Ein Verfahren gemäß Anspruch 2, bei dem das Polymer ein Polyimid ist.

4. Ein Verfahren gemäß Anspruch 1, bei dem die Oxidoberfläche aus einer Gruppe ausgewählt ist, die aus Oxiden von Silizium, Aluminium, Titan besteht.

5. Ein Verfahren gemäß Anspruch 1, bei dem die erste Struktur eine integrierte Schaltung ist und die Oxidoberfläche ein auf der integrierten Schaltung gebildetes Siliziumdioxid ist.

6. Ein Verfahren gemäß Anspruch 1, bei dem das Amin-Komplement freie Bindungsstellen aufweist, die aus einer Gruppe ausgewählt sind, die aus Hydroxyl-, Carbonyl-, Peroxyl-, Carboxyl-, Anhydrid-, Ester-, Epoxid- und Isocyanat-Gruppen besteht.

7. Ein Verfahren gemäß Anspruch 6, bei dem die zweite Struktur ein Verbund aus einem nicht-thermoplastischen Polyimid und einem thermoplastischen Polyimid ist, wobei die Polymeroberfläche zumindest einen Teil des thermoplastischen Polyimids umfasst, wobei Schritt d unter solchen Bedingungen durchgeführt wird, dass der Thermoplast nachgiebig ist, jedoch in einem nichtklebrigen Zustand bleibt.

8. Ein Verfahren gemäß Anspruch 1, bei dem Schritt b nach Schritt e durchgeführt wird.

9. Ein Verfahren gemäß Anspruch 1, bei dem Schritt b vor Schritt c durchgeführt wird.

10. Ein Verfahren gemäß Anspruch 1, bei dem bei Schritt c die Moleküle an die Oxidoberfläche gebunden werden.

## Revendications

1. Procédé de formation d'un dispositif microfluidique, ledit procédé comprenant les étapes consistant à :
a) obtenir une première structure ayant une surface en oxyde et une seconde structure ayant une surface en polymère ;
b) après l'étape a, former (S05) des canaux de fluide dans ladite seconde structure ;
c) après l'étape a, lier de manière covalente (S03) ou exposer par traitement chimique des molécules ayant des groupes amine à l'une de ladite surface en oxyde et de ladite surface en polymère de façon à former des sites amine libres ;
d) après l'étape a, traiter (S01) l'autre desdites surfaces de façon à former des sites complémentaires d'amine libre ; et
e) après les étapes c et d, lier de manière covalente (S08) lesdits sites amine auxdits sites complémentaires d'amine.

2. Procédé selon la revendication 1, dans lequel ledit polymère est choisi dans le groupe constitué par un polyimide, un polyuréthane, le polypropylène, le polyéthylène, le polydiméthylsiloxane, le poly(méthacrylate de méthyle), les polyacrylates, une polyétheréthercétone, un polycarbonate et le polystyrène.

3. Procédé selon la revendication 2, dans lequel ledit polymère est un polyimide.

4. Procédé selon la revendication 1, dans lequel ladite surface en oxyde est choisie dans le groupe constitué par les oxydes de silicium, d'aluminium, de titane.

5. Procédé selon la revendication 1, dans lequel ladite première structure est un circuit intégré et ladite surface en oxyde est du dioxyde de silicium formé sur ledit circuit intégré.

6. Procédé selon la revendication 1, dans lequel ledit complément d'amine a des sites de liaison libres choisis dans un groupe constitué par les groupes hydroxyle, carbonyle, péroxyle, carboxyle, anhydride, ester, époxyde et isocyanate.

7. Procédé selon la revendication 6, dans lequel ladite seconde structure est un composite d'un polyimide non thermoplastique et d'un polyimide thermoplastique, ladite surface en polymère comprenant au moins une certaine quantité dudit polyimide thermoplastique, l'étape d étant conduite dans des conditions telles que ledit thermoplastique est compliant mais reste dans un état non collant.

8. Procédé selon la revendication 1, dans lequel l'étape b est effectuée après l'étape e.

9. Procédé selon la revendication 1, dans lequel l'étape b est effectuée avant l'étape c.

10. Procédé selon la revendication 1, dans lequel, dans l'étape c, lesdites molécules sont liées à ladite surface en oxyde.
